# EUROPÄISCHE PATENTSCHRIFT

(11) **EP 3 065 968 B1**
(45) Veröffentlichungstag und Bekanntmachung des Hinweises auf die Patenterteilung: **02.10.2019**
(21) Anmeldenummer: 14836995.2
(22) Anmeldetag: 07.11.2014
(51) Int. Cl.: B60L 5/20, G01L 1/24, B60L 5/22, G01L 5/10, G01D 5/353

(54) **VORRICHTUNG ZUR VERSCHLEISSÜBERWACHUNG AN FAHRLEITUNGEN**
DEVICE FOR MONITORING WEAR ON CONTACT LINES
DISPOSITIF POUR LA SURVEILLANCE DE L' USURE SUR LES CATÉNAIRES

(30) Priorität: 07.11.2013 DE 102013018819
(43) Veröffentlichungstag der Anmeldung: 14.09.2016
(73) Patentinhaber: Hottinger Baldwin Messtechnik GmbH, 64293 Darmstadt (DE)
(72) Erfinder: VIEL, Wolfgang, 64297 Darmstadt (DE)
(74) Vertreter: Staudte, Ralph
(86) Internationale Anmeldenummer: PCT/DE2014/000571
(87) Internationale Veröffentlichungsnummer: WO 2015/067235

(56) Entgegenhaltungen:
- EP-A1- 1 707 427
- EP-A2- 0 356 834
- FR-A1- 2 962 217

## Beschreibung

Die Erfindung betrifft eine Vorrichtung zur Verschleißüberwachung an Fahrleitungen für elektrisch betriebene Schienenfahrzeuge, die einen Stromabnehmer mit einem Schleifleistenpaar aufweisen.

Die Kraft, mit welcher ein Schleifleistenpaar eines Stromabnehmers gegen die Fahrleitung gepresst wird, beeinflusst sowohl den Verschleiß der Fahrleitung als auch den Verschleiß der Schleifleisten. Durch das Messen der Anpresskraft und speziell durch das Messen von kurzzeitigen Änderungen der Anpresskraft kann auf Beschädigungen an der Fahrleitung oder an den Schleifleisten geschlossen werden.

Aus dem Stand der Technik sind verschiedene Vorrichtungen zum Messen der Anpresskraft und zum Überwachen des Verschleißes bekannt. In dem Dokument DE 102 49 896 B4 werden diese Zusammenhänge erläutert. So wird darauf hingewiesen, dass der Einsatz von Kraftsensoren mit elektrischen Dehnungsmessstreifen (DMS) zu Problemen führen kann, da die Sensorik einem Hochspannungspotenzial zwischen 1,5 kV und 25 kV ausgesetzt ist und beispielsweise mittels einer Batterie gespeist wird. Beim Einsatz von zwei Motorradbatterien soll eine Betriebsdauer von ca. 24 Stunden erreichbar sein. Eine Energiegewinnung aus der Fahrleitung ist für diese elektrische Kraftmesstechnik sehr aufwändig und störanfällig. Daher wird in dem Dokument DE 102 49 896 B4 vorgeschlagen, Sensoren vom Typ Faser-Bragg-Gitter, im folgenden als FBG-Sensoren bezeichnet, einzusetzen, weil diese von elektrischen Hochspannungsfeldern nicht beeinflusst werden. Allerdings ist der Bau von FBG-Sensoren mit höherer Genauigkeit schwierig. Einerseits können die dünnen optischen Fasern mit den FBG-Sensoren leicht an Bauteilen appliziert werden, die zumindest teilweise mit den zu messenden Kräften belastet werden. Diese Verfahrensweise führt aber zu einer geringen Messgenauigkeit. Verformungskörper, die speziell für herkömmliche DMS aus Metallfolie verwendet werden, können nur bedingt mit FBG-Sensoren bestückt werden, weil auf Grund der hohen Elastizität und der bei der Applikation einzuhaltenden großen Biegeradien der optischen Faser die Applikation von FBG-Sensoren wesentlich mehr Raum erfordert. Mit anderen Worten, die Applikationsstellen an den Verformungskörpern für FBG-Sensoren müssen im Vergleich zu Verformungskörpern für elektrische, d. h. metallische DMS, wesentlich großflächiger ausgebildet sein, was das Volumen des Verformungskörpers insgesamt vergrößert.

In dem Dokument EP 1 707 427 A1 ist ein Stromabnehmer für eine Eisenbahnzugmaschine beschrieben, bei dem zwei Schleifleisten durch zwei Verbindungsholme gegen eine Fahrleitung gedrückt werden, wobei die Schleifleisten und die Verbindungsholme über Kraftaufnehmer miteinander verbunden sind, die quer zu den Verbindungsholmen ausgerichtet sind. In dem Dokument FR 2 962 217 A1 ist zudem eine Kraftmesszelle mit mindestens einem FBG-Sensor als Dehnungsaufnehmer beschrieben, wobei die Kraftmesszelle unter anderem zum Messen der Kräfte zwischen einem Stromabnehmer eines Zuges und der Fahrleitung eingesetzt werden kann.

In dem vorgesehenem Einsatzgebiet gibt es die Anforderung, dass durch die eingesetzte Sensorik der Luftwiderstand am Stromabnehmer nicht mehr als 5 % ansteigen darf. Die aus dem Stand der Technik bekannt gewordenen Messsysteme sind entweder relativ ungenau oder zu voluminös, d. h. sie haben in Fahrtrichtung einen zu hohen Luftwiderstand. Die Forderung nach einem möglichst geringen Luftwiderstand in Fahrtrichtung wird nicht zur Energieeinsparung erhoben. Die Stromabnehmer sind so konstruiert und justiert, dass sie auch bei hohen Fahrgeschwindigkeiten nicht zum Schwingen neigen. Mechanische Schwingungen können zu unkontrollierbaren, sich aufschaukelnden Resonanzeffekten führen, die den Stromabnehmer oder sogar die Fahrleitung beschädigen. Da die Nachrüstung von Sensorik auch Änderungen bezüglich des Strömungsverhaltens, d. h. des Luftwiderstands des Stromabnehmers bewirken, wird dieser Grenzwert von maximal 5% vorgeschrieben.

Eine weitere, prinzipielle Forderung für diese Kraftmesssysteme sind möglichst geringe Herstellungskosten und eine hohe mechanische Robustheit. Wenn z. B. die Fahrleitungen vereist sind, dürfen die Verformungskörper oder die daran applizierten Sensoren nicht beschädigt werden. Um diese Forderung zu erfüllen, ist aus dem Stand der Kraftmess- und Wägetechnik bekannt, Überlastsicherungen in Form von mechanischen Anschlägen vorzusehen. Derartige Überlastsicherungen sind jedoch voluminös und vergrößern somit zusätzlich den Luftwiderstand, wenn sie nicht in bestehende Konstruktionselemente des Stromabnehmers aerodynamisch integriert sind. Eine derartige aerodynamische Integration verlangt jedoch immer eine Spezialkonstruktion und ist daher teuer.

Somit sind die Forderungen nach hoher Messgenauigkeit, geringen Herstellungskosten und gleichzeitig hoher mechanischer Robustheit und geringem aerodynamischen Widerstand schwer erfüllbar.

Insofern besteht die Aufgabe der Erfindung in der Schaffung eines Kraftmesssystems zur Bestimmung der Anpresskraft zwischen Stromabnehmer und Fahrleitung während der Fahrt, um dadurch den Verschleiß oder Beschädigungen der Fahrleitung ermitteln zu können. Das Kraftmesssystem muss eine hohe mechanische Robustheit gegen Überlast, wie sie bei Vereisung der Fahrleitung auftritt, aufweisen. Die Baugröße und besonders der aerodynamische Widerstand in Fahrtrichtung sollen gering sein.

Diese Aufgabe wird mit einer Vorrichtung zur Verschleißüberwachung an Fahrleitungen mittels eines Kraftmesssystems nach Anspruch 1 gelöst.

Diese Vorrichtung hat den Vorteil, dass sie einen besonders geringen Luftwiderstand in Fahrtrichtung des Schienenfahrzeugs aufweist und relativ unempfindlich gegen stoßförmige Überlastungen ist. Besonders im Fall der Fahrleitungsvereisung erweist sich der verwendete Verformungskörper als sehr robust. Die erreichte Messgenauigkeit ist deutlich höher als bei Konstruktionen, bei denen lediglich Dehnungssensoren auf bereits vorhandene Bauteile appliziert sind, wodurch die tatsächlich wirkenden Kräfte nur relativ ungenau erfasst werden können. Aufgrund der zwischen den Schleifleisten und den stabförmigen Kraftaufnehmern angeordneten plattenförmigen Federelemente kann die Vorrichtung relativ große stoßförmige Belastungen aufnehmen, ohne dass der Kraftaufnehmer durch Überlastung beschädigt wird.

Nach Anspruch 2 ist zwischen den Verbindungsholmen und den stabförmigen Kraftaufnehmern je ein plattenförmiges Federelement angeordnet ist. Es handelt sich hierbei um eine Alternative oder einen Zusatz zu den plattenförmigen Federelementen der Vorrichtung nach Anspruch 1.

Nach Anspruch 3 ist sowohl zwischen den Schleifleisten und den stabförmigen Kraftaufnehmern als auch zwischen den Verbindungsholmen und den stabförmigen Kraftaufnehmern je ein plattenförmiges Federelement angeordnet. Diese Weiterbildung der Vorrichtung hat den Vorteil, dass sie noch unempfindlicher auch gegen relativ große stoßförmige Belastungen ist.

Die Ausführungsform nach Anspruch 3 kann als die beste Ausführungsform bezeichnet werden.

Nach Anspruch 4 weisen die Kraftaufnehmer Faser-Bragg-Gitter-Sensoren (FBG-Sensoren) auf, die unempfindlich gegen elektromagnetische Felder sind. Da sich bewegende elektromagnetische Felder Spannungen in der Messelektronik induzieren können, würden diese die Messgenauigkeit beeinflussen. Das wird durch die Anwendung von FBG-Sensoren verhindert, weil optische Signale durch elektromagnetische Felder nicht beeinflusst werden. Obwohl dieser Verformungskörper auf Grund der vorstehend beschriebenen Zusammenhänge etwas voluminöser ist als ein Verformungskörper mit Metallfolien-DMS, bewirken die Stabform des Verformungskörpers in Verbindung mit dem Einbau in Fahrtrichtung ein optimales Messsystem.

Nach Anspruch 5 ist um den Bereich der Verbindung zwischen dem jeweiligen stabförmigen Kraftaufnehmer und dem jeweiligen Verbindungsholm eine aus Stahl oder Aluminium gefertigte, einseitig am Verbindungsholm befestigte starre Schutzhülse angeordnet. Die Seite der Schutzhülse, welche nicht befestigt ist, kann zur Vermeidung von Verschmutzung eine Abdichtung aus Kunststoff enthalten. Diese Schutzhülse bietet neben dem mechanischen Schutz auch einen Teilschutz gegen elektromagnetische Felder.

Nach Anspruch 6 ist der Durchmesser der starren Schutzhülse so gewählt, dass deren Innenfläche als Überlastanschlag wirkt. Dadurch wird der mechanische Schutz des Verformungskörpers gegen Überlastung noch weiter verbessert.

Nach Anspruch 7 ist um den Bereich der Verbindung zwischen dem jeweiligen stabförmigen Kraftaufnehmer und dem jeweiligen Verbindungsholm ein aus Edelstahl gefertigter Faltenbalg angeordnet, der an beiden Enden einen Abschnitt zum hermetischen Abdichten aufweist. Diese Weiterbildung der Vorrichtung ist dann zu bevorzugen, wenn ein guter Schutz vor Korrosion und Verschmutzung angestrebt wird.

Der Aufbau, die Funktion und die weiteren Vorteile der Vorrichtung zur Verschleißüberwachung an Fahrleitungen mittels eines Kraftmesssystems werden nachfolgend an Hand von Ausführungsbeispielen in Verbindung mit schematischen Zeichnungen näher erläutert.

Beschreibung der Zeichnungen:
- Fig. 1: zeigt eine perspektivische schematische Darstellung einer ersten Ausführungsform einer Vorrichtung zur Verschleißüberwachung an Fahrleitungen.
- Fig. 2: zeigt eine perspektivische schematische Darstellung einer zweiten Ausführungsform der Vorrichtung zur Verschleißüberwachung an Fahrleitungen.
- Fig. 3a: zeigt einen mit einer Schutzhülse versehenen Abschnitt der Ausführungsform nach Fig. 2 vergrößert dargestellt.
- Fig. 3b: zeigt einen mit einem Faltenbalg versehenen Abschnitt der Ausführungsform nach Fig. 2 vergrößert dargestellt.
- Fig. 4: zeigt einen Doppel-Stromabnehmer aus dem Stand der Technik.

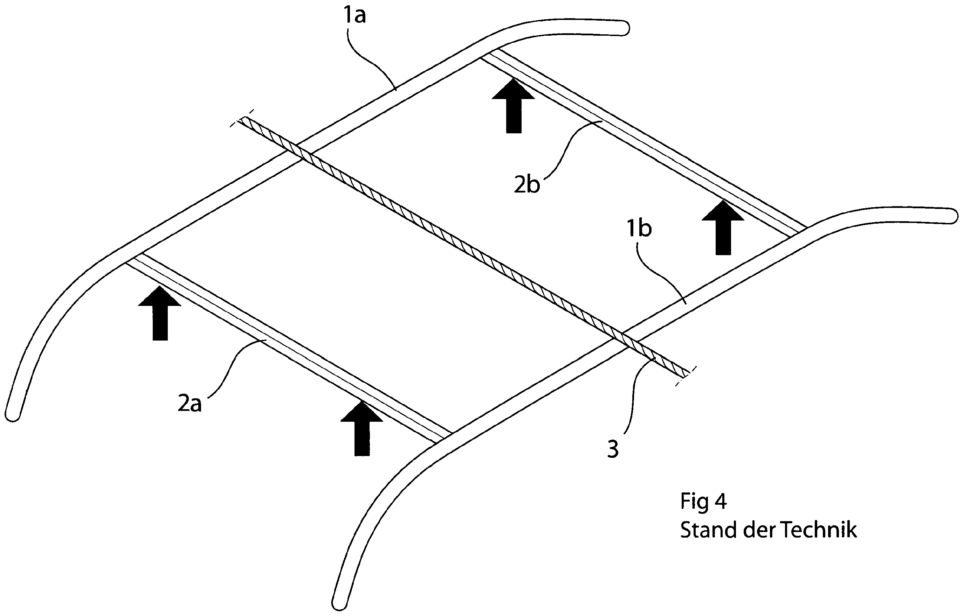

Wie in Fig. 4 gezeigt, weist der Doppel-Stromabnehmer nach dem Stand der Technik zwei Schleifleisten 1a, 1b und zwei mit diesen verbundene Verbindungsholme 2a, 2b auf, wobei im Betriebszustand die Schleifleisten 1a, 1b rechtwinklig zur Fahrleitung 3 und die Verbindungsholme 2a, 2b parallel zu diesem ausgerichtet sind. Mittels Andrückgestängen, die mit den Verbindungsholmen 2a, 2b gekoppelt, aber nicht gezeigt sind, werden die Schleifleisten 1a, 1b an die Fahrleitung 3 gedrückt. Die Pfeilspitzen der 4 aufwärts gerichteten Kraftpfeile zeigen auf die Koppelpunkte der nicht dargestellten Andrückgestänge.

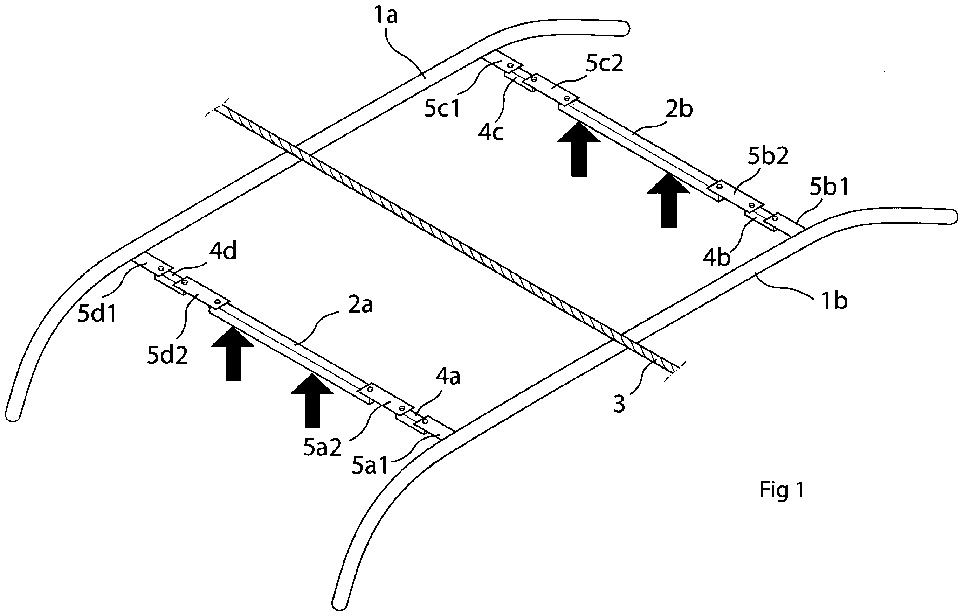

Wie Fig. 1 zeigt, ist bei einer ersten Ausführungsform einer Vorrichtung zur Verschleißüberwachung an Fahrleitungen an jedem Endabschnitt der beiden Verbindungsholme 2a, 2b je ein sich parallel zur Fahrleitung 3, d. h. in Fahrtrichtung, erstreckender stabförmiger Kraftaufnehmer 4a - 4d angeordnet. Dadurch bewirken während der Fahrt im Wesentlichen lediglich die relativ kleinen Stirnflächen der stabförmigen Kraftaufnehmer 4a - 4d, aber nicht deren wesentlich größere Seitenflächen den aerodynamischen Fahrtwiderstand. Die stabförmigen Kraftaufnehmer 4a - 4d sind über plattenförmige Federelemente 5a1 - 5d1 mit den beiden Schleifleisten 1a, 1b und über plattenförmige Federelemente 5a2 - 5d2 mit den beiden Verbindungsholmen 2a, 2b verbunden. Auch diese plattenförmigen Federelemente 5a2 - 5d2 sind so ausgerichtet, dass lediglich ihre relativ kleinen Stirnflächen in Fahrtrichtung zeigen und somit nur einen geringen Strömungswiderstand erzeugen.

Die plattenförmigen Federelemente 5a1 - 5d1 und 5a2 - 5d2 nehmen speziell seitliche Stoßbelastungen auf und verhindern somit, dass diese direkt auf die stabförmigen Kraftaufnehmer 4a - 4d übertragen werden. Solche z.B. durch Fahrleitungsvereisungen oder größere Fahrleitungsschäden auftretenden Stoßbelastungen könnten ohne Vorhandensein dieser Federelemente die stabförmigen Kraftaufnehmer 4a - 4d überlasten und dadurch beschädigen.

Mit diesem Kraftmesssystem kann nach signaltechnischer Verbindung mit einer passenden Auswerteelektronik, die elektrische oder optische Messsignale verarbeitet, die von den Schleifleisten 1a, 1b auf die Fahrleitung 3 aufgebrachte Kraft gemessen werden, wobei das Messen sowohl im Stillstand des Fahrzeugs als auch während der Fahrt möglich ist.

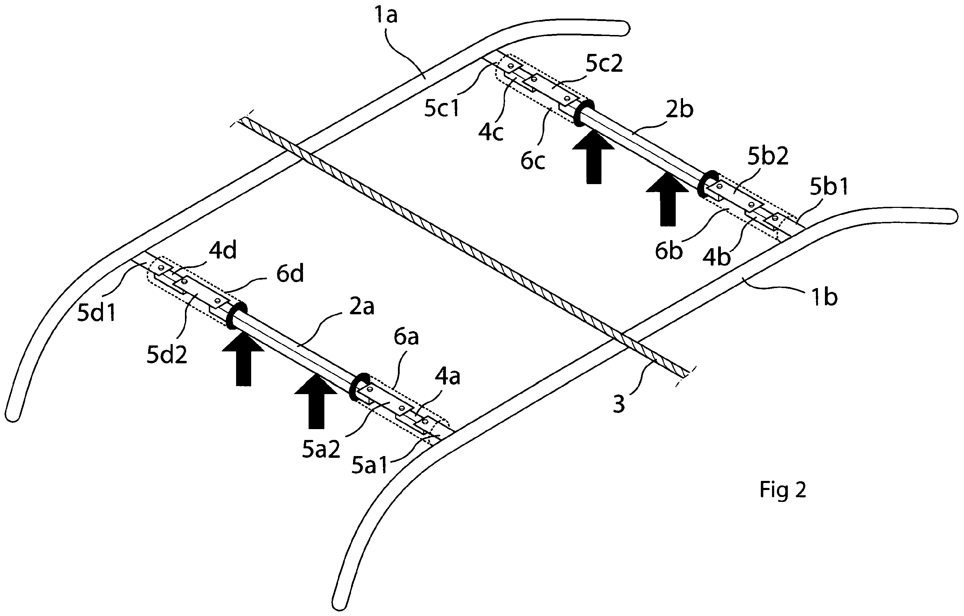

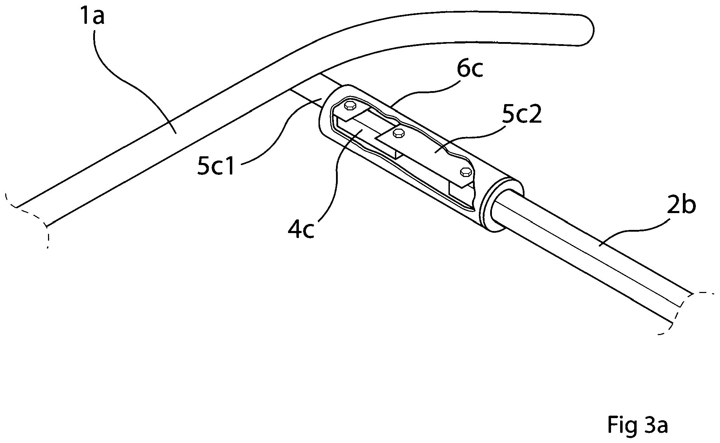

Wie Fig. 2 und Fig. 3a zeigen, ist um den Bereich der Verbindung zwischen dem jeweiligen stabförmigen Kraftaufnehmer 4a - 4d, dem jeweiligen plattenförmigen Federelement 5a1 - 5d1, 5a2 - 5d2 und dem jeweiligen Verbindungsholm 2a, 2b eine aus Stahl oder Aluminium gefertigte, einseitig am Verbindungsholm 2a, 2b befestigte starre Schutzhülse 6a - 6d angeordnet. Vorteilhafterweise ist der Durchmesser der starren Schutzhülse 6a - 6d so gewählt, dass deren Innenfläche als Überlastanschlag wirkt, falls eine Belastung auftritt, die eine unzulässig große Auslenkung und somit eine Beschädigung des Kraftaufnehmers 4a - 4d bewirken würde. Um den Innenraum der starren Schutzhülse 6a - 6d vor Verschmutzung zu sichern, ist die nicht befestigte Seite der Schutzhülse mit einer nicht dargestellten weichelastischen Abdichtung versehen. Die weichelastische Abdichtung kann z. B. Silikongummi sein.

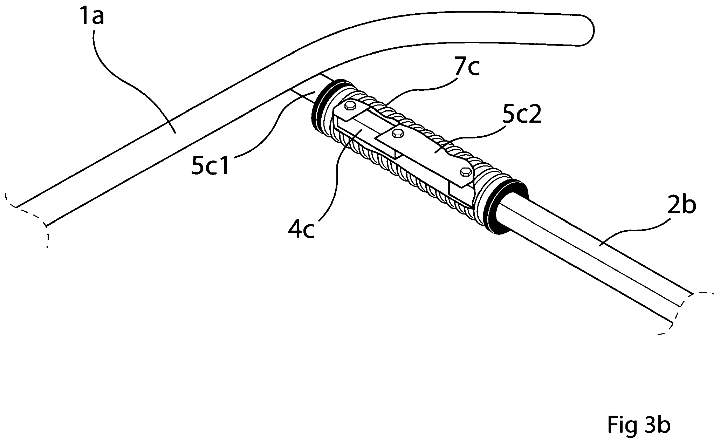

Wie Fig. 3b zeigt, ist um den Bereich der Verbindung zwischen dem jeweiligen stabförmigen Kraftaufnehmer 4a - 4d, dem jeweiligen plattenförmigen Federelement 5a1 - 5d1, 5a2 - 5d2 und dem jeweiligen Verbindungsholm 2a, 2b ein aus Edelstahl gefertigter Faltenbalg 7a - 7d angeordnet, der an beiden Enden einen Abschnitt zum hermetischen Abdichten aufweist. Diese Ausführungsform ist vorzugsweise einsetzbar, wenn eine besonders gute Kapslung des Kraftaufnehmers gefordert wird.

Die Zeichnungen zeigen nur einige bevorzugte Ausführungsformen. Alle gleichwertigen Variationen und Änderungen, die entsprechend den beigefügten Ansprüchen vorgenommen werden, sind durch diese Ansprüche abgedeckt.

## Patentansprüche

1. Vorrichtung zur Verschleißüberwachung an Fahrleitungen (3) mittels eines Kraftmesssystems, welches folgende Merkmale aufweist:
- zwei Schleifleisten (1a, 1b), die im Betriebszustand rechtwinklig zu der zu überwachenden Fahrleitung (3) ausgerichtet sind,
- zwei, einen ersten und einen zweiten Endabschnitt aufweisende Verbindungsholme (2a, 2b), die im Betriebszustand parallel zu der Fahrleitung (3) ausgerichtet und aufwärts gedrückt werden, sodass die zwei Schleifleisten (1a, 1b) mit einer vorbestimmten Kraft gegen die Fahrleitung (3) gedrückt werden, wobei
- an jedem Endabschnitt der beiden Verbindungsholme (2a, 2b) je ein stabförmiger, einen ersten und einen zweiten Endabschnitt aufweisender Kraftaufnehmer (4a - 4d) angeordnet ist, an dem Dehnungssensoren angeordnet sind, und
- die ersten Endabschnitte der Kraftaufnehmer (4a, 4b) mit der Schleifleiste (1b) verbunden sind,
- die ersten Endabschnitte der Kraftaufnehmer (4c, 4d) mit der Schleifleiste (1a) verbunden sind und
- der zweite Endabschnitt des Kraftaufnehmers (4a) mit dem ersten Endabschnitt des Verbindungsholms (2a) verbunden ist,
- der zweite Endabschnitt des Kraftaufnehmers (4b) mit dem ersten Endabschnitt des Verbindungsholms (2b) verbunden ist,
- der zweite Endabschnitt des Kraftaufnehmers (4c) mit dem zweiten Endabschnitt des Verbindungsholms (2b) verbunden ist und
- der zweite Endabschnitt des Kraftaufnehmers (4d) mit dem zweiten Endabschnitt des Verbindungsholms (2a) verbunden ist,
**dadurch gekennzeichnet, dass**
- sich die Längsachse der Kraftaufnehmer (4a, 4d) in Richtung der Längsachse des Verbindungsholms (2a) und die Längsachse der Kraftaufnehmer (4b, 4c) in Richtung der Längsachse des Verbindungsholms (2b) erstreckt und
- zwischen den Schleifleisten (1a, 1b) und den stabförmigen Kraftaufnehmern (4a - 4d) je ein plattenförmiges Federelement (5a1 - 5d1) angeordnet ist.

2. Vorrichtung zur Verschleißüberwachung an Fahrleitungen nach Anspruch 1, wobei zwischen den Endabschnitten der Verbindungsholme (2a, 2b) und den Endabschnitten der stabförmigen Kraftaufnehmer (4a - 4d) je ein plattenförmiges Federelement (5a2 - 5d2) angeordnet ist.

3. Vorrichtung zur Verschleißüberwachung an Fahrleitungen nach Anspruch 1, wobei zwischen den Schleifleisten (1a, 1b) und den Endabschnitten der stabförmigen Kraftaufnehmer (4a - 4d) je ein plattenförmiges Federelement (5a1 - 5d1) und zwischen den Verbindungsholmen (2a, 2b) und den Endabschnitten der stabförmigen Kraftaufnehmer (4a - 4d) je ein plattenförmiges Federelement (5a2 - 5d2) angeordnet ist.

4. Vorrichtung zur Verschleißüberwachung an Fahrleitungen nach Anspruch 1, wobei die stabförmigen Kraftaufnehmer (4a - 4d) FBG-Sensoren aufweisen.

5. Vorrichtung zur Verschleißüberwachung an Fahrleitungen nach Anspruch 1, wobei um den Bereich der Verbindung zwischen dem jeweiligen stabförmigen Kraftaufnehmer (4a - 4d) und dem jeweiligen Verbindungsholm (2a, 2b) eine aus Stahl oder Aluminium gefertigte, einseitig am Verbindungsholm (2a, 2b) befestigte starre Schutzhülse (6a - 6d) angeordnet ist.

6. Vorrichtung zur Verschleißüberwachung an Fahrleitungen nach Anspruch 5, wobei der Durchmesser der starren Schutzhülse (6a - 6d) so gewählt ist, dass deren Innenfläche als Überlastanschlag wirkt.

7. Vorrichtung zur Verschleißüberwachung an Fahrleitungen nach Anspruch 1, wobei um den Bereich der Verbindung zwischen dem jeweiligen stabförmigen Kraftaufnehmer (4a - 4d) und dem jeweiligen Verbindungsholm (2a, 2b) ein aus Edelstahl gefertigter Faltenbalg (7a - 7d) angeordnet ist, der an beiden Enden einen Abschnitt zum hermetischen Abdichten aufweist.

## Claims

1. A device for monitoring wear on overhead contact lines (3) by means of a force measurement system, said device having the following features:
- two sliding contact bars (1a, 1b) oriented in operation at right angles to the overhead contact line (3) to be monitored,
- two connecting bars (2a, 2b) each having a first and a second end section and which in operation are oriented parallel to the overhead contact line (3) and are pushed upwards so that the two sliding contact bars (1a, 1b) are pressed with a predetermined force against the overhead contact line (3), wherein
- rod-shaped force transducers (4a - 4d) each having a first and a second end section and on which strain sensors are disposed are respectively arranged at each end section of the two connecting bars (2a, 2b), and
- the first end sections of force transducers (4a, 4b) are connected to sliding contact bar (1b),
- the first end sections of force transducers (4c, 4d) are connected to sliding contact bar (1a) and
- the second end section of force transducer (4a) is connected to the first end section of connecting bar (2a),
- the second end section of force transducer (4b) is connected to the first end section of connecting bar (2b),
- the second end section of force transducer (4c) is connected to the second end section of connecting bar (2b) and
- the second end section of force transducer (4d) is connected to the second end section of connecting bar (2a),
**characterised in that**
- the longitudinal axis of force transducers (4a, 4d) extends in the direction of the longitudinal axis of connecting bar (2a) and the longitudinal axis of force transducers (4b, 4c) extends in the direction of the longitudinal axis of connecting bar (2b) and
- a plate-shaped spring element (5a1 - 5d1) is arranged between each of the sliding contact bars (1a, 1b) and the rod-shaped force transducers (4a - 4d).

2. The device according to claim 1 for monitoring wear on overhead contact lines, wherein a plate-shaped spring element (5a2 - 5d2) is arranged between each of the end sections of the connecting bars (2a, 2b) and the end sections of the rod-shaped force transducers (4a - 4d).

3. The device according to claim 1 for monitoring wear on overhead contact lines, wherein a plate-shaped spring element (5a1 - 5d1) is arranged between each of the sliding contact bars (1a, 1b) and the end sections of the rod-shaped force transducers (4a - 4d) and a plate-shaped spring element (5a2 - 5d2) is arranged between each of the connecting bars (2a, 2b) and the end sections of the rod-shaped force transducers (4a - 4d).

4. The device according to claim 1 for monitoring wear on overhead contact lines, wherein the rod-shaped force transducers (4a - 4d) have FBG sensors.

5. The device according to claim 1 for monitoring wear on overhead contact lines, wherein a rigid protective sleeve (6a - 6d) made of steel or aluminium and secured to one side of the respective connecting bar (2a, 2b) is arranged around the area of connection between the respective rod-shaped force transducer (4a - 4d) and the respective connecting bar (2a, 2b).

6. The device according to claim 5 for monitoring wear on overhead contact lines, wherein the diameter of the rigid protective sleeve (6a - 6d) is chosen such that its inner surface acts as an overload stop.

7. The device according to claim 1 for monitoring wear on overhead contact lines, wherein a bellows (7a - 7d) made of stainless steel and having a section at either end for hermetic sealing is arranged around the area of connection between the respective rod-shaped force transducer (4a - 4d) and the respective connecting bar (2a, 2b).

## Revendications

1. Dispositif de surveillance de l'usure de caténaires (3) au moyen d'un système de mesure de force, lequel comprend les caractéristiques suivantes:
- deux bandes de frottement (1a, 1b) qui, dans l'état de fonctionnement, sont orientées perpendiculairement à la caténaire (3) à surveiller,
- deux barres de liaison (2a, 2b) qui comprennent une première et une deuxième partie d'extrémité et qui, dans l'état de fonctionnement, sont orientées parallèlement à la caténaire (3) et appuient vers le haut de manière à ce que les deux bandes de frottement (1a, 1b) soient pressées avec une force prédéterminée contre la caténaire (3), dans lequel
- un capteur de force (4a - 4d) en forme de barre comprend une première et une deuxième partie d'extrémité et est respectivement disposé à chaque partie d'extrémité des deux barres de liaison (2a, 2b), des extensomètres étant disposés sur lui, et
- les premières parties d'extrémité des capteurs de force (4a, 4b) sont reliées à la bande de frottement (1b),
- les premières parties d'extrémité des capteurs de force (4c, 4d) sont reliées à la bande de frottement (1a), et
- la deuxième partie d'extrémité du capteur de force (4a) est reliée à la première partie d'extrémité de la barre de liaison (2a),
- la deuxième partie d'extrémité du capteur de force (4b) est reliée à la première partie d'extrémité de la barre de liaison (2b),
- la deuxième partie d'extrémité du capteur de force (4c) est reliée à la deuxième partie d'extrémité de la barre de liaison (2b), et
- la deuxième partie d'extrémité du capteur de force (4d) est reliée à la deuxième partie d'extrémité de la barre de liaison (2a),
**caractérisé en ce que**
- l'axe longitudinal des capteurs de force (4a, 4d) s'étend dans la direction de l'axe longitudinal de la barre de liaison (2a) et l'axe longitudinal des capteurs de force (4b, 4c) s'étend dans la direction de l'axe longitudinal de la barre de liaison (2b), et
- un élément de ressort en forme de plaque (5a1 - 5d1) est respectivement disposé entre les bandes de frottement (1a, 1b) et les capteurs de force (4a - 4d) en forme de barre.

2. Dispositif de surveillance de l'usure de caténaires selon la revendication 1, dans lequel un élément de ressort en forme de plaque (5a2 - 5d2) est respectivement disposé entre les parties d'extrémité des barres de liaison (2a, 2b) et les parties d'extrémité des capteurs de force (4a - 4d) en forme de barre.

3. Dispositif de surveillance de l'usure de caténaires selon la revendication 1, dans lequel un élément de ressort en forme de plaque (5a1 - 5d1) est respectivement disposé entre les bandes de frottement (1a, 1b) et les parties d'extrémité des capteurs de force (4a - 4d) en forme de barre, et dans lequel un élément de ressort en forme de plaque (5a2 - 5d2) est respectivement disposé entre les barres de liaison (2a, 2b) et les parties d'extrémité des capteurs de force (4a - 4d) en forme de barre.

4. Dispositif de surveillance de l'usure de caténaires selon la revendication 1, dans lequel les capteurs de force (4a - 4d) en forme de barre comprennent des capteurs à fibres optiques à réseaux de Bragg.

5. Dispositif de surveillance de l'usure de caténaires selon la revendication 1, dans lequel un manchon protecteur rigide (6a - 6d) fabriqué en acier ou en aluminium et fixé sur un côté à la barre de liaison (2a, 2b) est disposé autour de la zone de liaison entre le respectif capteur de force (4a - 4d) en forme de barre et la respective barre de liaison (2a, 2b).

6. Dispositif de surveillance de l'usure de caténaires selon la revendication 5, dans lequel le diamètre du manchon protecteur rigide (6a - 6d) est choisi de manière à ce que la surface intérieure de celui-ci agisse en tant que butée de surcharge.

7. Dispositif de surveillance de l'usure de caténaires selon la revendication 1, dans lequel un soufflet (7a - 7d) fabriqué en acier inoxydable est disposé autour de la zone de liaison entre le respectif capteur de force (4a - 4d) en forme de barre et la respective barre de liaison (2a, 2b), ledit soufflet comprenant une section de scellement hermétique aux deux extrémités.
